# FASCICULE DE BREVET EUROPEEN

(11) **EP 0 558 410 B1**
(45) Date de publication et mention de la délivrance du brevet: **26.08.1998**
(21) Numéro de dépôt: 93400476.3
(22) Date de dépôt: 24.02.1993
(51) Int. Cl.: C09H 3/00, G03C 1/047

(54) **Procédé de préparation d'une gélatine pour les émulsions photographiques et gélatine obtenue**
Verfahren zur Herstellung von Gelatine für photographische Emulsionen und damit erhältliche Gelatine
Process for obtaining gelatine for photographic emulsions and gelatine produced thereby

(30) Priorité: 26.02.1992 FR 9202253
(43) Date de publication de la demande: 01.09.1993
(73) Titulaire: SKW BIOSYSTEMS, 75008 Paris (FR)
(72) Inventeur: Goirand, Alain, F-13000 Aubagne (FR); Schoentjes, Michel, F-92410 Ville D'Avray (FR); Tournier, Sylviane, F-84800 Isle sur la Sorgue (FR)
(74) Mandataire: Le Guen, Gérard

(56) Documents cités:
- EP-A- 0 227 444
- DD-A- 160 370
- H. AMMAN-BRASS & J. POURADIER 'PHOTOGRAPHIC GELATIN: PROCEEDINGS OF THE FIFTH IAG CONFERENCE HELD AT FRIBOURG, SEPTEMBER 1988 PART 1' 1989 , FRIBOURG, DE; M. De Clerq: 'Chemical aspects of photogelatin production'
- JOURNAL OF PHOTOGRAPHIC SCIENCE vol. 37, no. 1, 1989, LONDON GB pages 14 - 18 F. J. MOLL 'The oxidation of gelatin'
- CHEMICAL ABSTRACTS, vol. 49, no. 11, 1955, Columbus, Ohio, US; 'The production of gelatin for photographic purposes' colonne 7886G ;
- JOURNAL OF PHOTOGRAPHIC SCIENCE vol. 16, no. 1, 1968, LONDON GB pages 68 - 69 J. POURADIER & A. RONDEAU 'On the methionine sulphoxide of gelatin'

## Description

La présente invention concerne un procédé de préparation d'une gélatine pour émulsions photographiques et la gélatine obtenue.

Les gélatines inertes c'est-à-dire à faible taux d'éléments retardateurs et sensibilisateurs, sont très utilisées pour la préparation des émulsions photographiques.

C'est généralement par un traitement oxydant qu'est modifié le taux de substances actives présentes dans la gélatine et particulièrement le taux des substances soufrées et réductrices, qui selon les formules d'émulsion peuvent avoir un rôle retardateur, désensibilisateur, ou sont des agents voilants.

L'oxydation de la gélatine a aussi pour avantage d'améliorer sa qualité bactériologique et elle a souvent été préconisée dans ce but.

Différentes revues décrivent les conséquences de l'oxydation de la gélatine, dont celle de F.J. Moll - The Journal of Photographic Science, Vol. 37 (1989) p.14-18; au cours de la dernière réunion de la Royal Photographic Society - Gelatin Symposium (Cambridge) 16 Sept. 1991, ce sujet a aussi été traité.

Par ailleurs, l'importance de la méthionine, aminoacide constitutif de la gélatine, a été soulignée à plusieurs reprises ; dans EP-A-0423840 et US 4,914,014, notamment, on recommande d'utiliser des gélatines ayant une concentration en méthionine inférieure à 30 micromoles par gramme ou de préférence inférieure à 12 µM/g ou même moins, pour obtenir des grains d'halogénures d'argent de type tabulaire, avec un rapport surface sur épaisseur élevé ; de telles gélatines sont d'après ces documents obtenues par oxydation, par exemple avec de l'eau oxygénée, des gélatines commerciales.

Par contre, d'autres spécialistes dont J. Pouradier et Coll dans J. of Photographic Science 16 mars-avril 1968 - p. 68-69, ont indiqué que la présence de méthionine serait avantageuse dans les émulsions contenant des sels d'or, dont l'intérêt est bien connu en sensibilisation.

Par ailleurs, il est intéressant pour l'utilisateur, le fabricant d'émulsions, d'avoir la liberté de modifier selon ses besoins le taux de méthionine par oxydation ou par alkylation, par exemple.

Il serait donc souhaitable d'obtenir, de façon reproductible malgré la variabilité des matières premières naturelles, sources de la gélatine, un produit inerte, de bonne qualité bactériologique, qui comporte pourtant un certain taux de méthionine. Le procédé selon l'invention permet de préparer une telle qualité de gélatine par la maîtrise des conditions oxydo-réductrices en cours de fabrication.

On sait que la gélatine préparée par un traitement basique des os, tel qu'un chaulage, est préférée à celle obtenue par un traitement acide, notamment des peaux. Certains auteurs, dont P. Glafkides dans Chimie et Physique photographiques - p. 429 Ed Usine Nouvelle, 5ème Ed. (1987), ont même écrit que la gélatine préparée à partir d'os durs longuement chaulés est naturellement plus inerte que la gélatine inactivée, par exemple par oxydation.

La présente invention concerne un procédé de fabrication d'une gélatine inerte et qui comprend de 6000 à 8500 ppm de méthionine, dont moins de 20 % est sous forme oxydée ; ce procédé met en oeuvre, mais dans des conditions oxydo-réductrices maîtrisées, les étapes classiques de déminéralisation des os sous l'action d'un acide, puis de transformation et purification du collagène par traitement de l'osséine résiduelle avec une solution d'hydroxyde de calcium, avant l'extraction de la gélatine dans de l'eau.

On peut se référer à l'ouvrage de A.G. Ward et A. Courts intitulé The Science and Technology of Gelatin - Food Science and Technology - p. 295-364 - Ed Academic Press, qui traite de ces procédés classiques ainsi qu'à celui de Arthur Veis : The macromolecular Chemistry of gelatin (1964) Academic Press.

Ainsi, selon l'invention, le procédé d'obtention d'une gélatine pour émulsions photographiques, inerte et dont le taux de méthionine est compris entre 6000 et 8500 ppm, moins de 20 % en poids de la dite méthionine étant sous forme oxydée, consiste à :
a) traiter les os dégraissés par une solution aqueuse d'un acide pour solubiliser les substances minérales, et obtenir l'osséine;
b) maintenir l'osséine obtenue, pendant plusieurs semaines, à une température comprise entre 5 °C et 25°C, dans une solution aqueuse sursaturée d'hydroxyde de calcium, pour transformer le collagène, puis laver et neutraliser;
c) extraire avec de l'eau chaude, la gélatine par traitement de l'osséine ainsi obtenue; et
d) concentrer la solution de gélatine obtenue,puis gélifier et sécher la gélatine,
en maîtrisant le pouvoir oxydo-réducteur des milieux lors des étapes de traitement par introduction, vers la fin du traitement par l'hydroxyde de calcium en b), d'un agent oxydant à raison de 0,5 à 15 mmole/litre de milieu. Par forme oxydée, on entend le sulfoxyde et la sulfone correspondants ; la sulfone, toujours en moindre proportion, constitue en général au plus 10 % des 2 oxydes et mieux moins de 3 % en poids.

On sait qu'une gélatine est considérée comme inerte lorsqu'elle contient notamment moins de 10 ppm de cystéine, moins de 5 ppm de fer, moins de 5 ppm de résidus d'acide nucléique et moins de 2 ppm de soufre/thiosulfate; ces concentrations étant mesurées par les méthodes classiques de l'association japonaise : Photography and Gelatin Industry (P.A.G.I.), publiées régulièrement (4ème édition 1987).

On maîtrise le pouvoir oxydo-réducteur au cours des différentes étapes b) et le cas échéant c) en ajoutant, selon les besoins, des agents oxydants et éventuellement lors de l'extraction finale, des agents réducteurs. La quantité d'agent oxydant ou réducteur à ajouter est déterminée par l'homme du métier par des essais préalables; il importe de souligner que l'eau utilisée dans les différentes étapes est un facteur important dans ce contrôle du pouvoir oxydo-réducteur et que pour assurer la reproductibilité des différents lots de fabrication, il importera de faire un dosage iodométrique classique sur l'eau qui sera utilisée pour éventuellement ajuster son pouvoir oxydo-réducteur, afin de le maintenir constant, d'une opération à l'autre.

En général, on ne réajuste le pouvoir oxydant des milieux que vers la fin de l'étape correspondante.

Ainsi lors du traitement basique à la chaux des os déminéralisés, on introduit dans les milieux quelque jours avant la fin, entre 1 et 3 semaines suivant la durée du traitement, un agent oxydant tel qu'un hypochlorite alcalin ou alcalino-terreux à raison de 0,5 à 15 mmole par litre de milieu.

Lors des lavages et neutralisation de l'osséine, avant extraction de la gélatine, lorsque le pH des eaux de lavage est inférieur à 9, on peut introduire dans l'eau de lavage un agent oxydant à raison de 0,1 à 10 mmole/litre, en général un hyprochlorite alcalin ou alcalino-terreux, de l'eau oxygénée, un peracide, etc.

Enfin, si un essai préalable a montré la necessité, pour obtenir les taux de méthionine et de ses oxydes désirés, d'intervenir lors de l'extraction en introduisant un agent oxydant ou réducteur dans les bouillons de gélatine avant leur concentration, l'homme du métier déterminera par quelques essais préalables la quantité et le type d'agent à ajouter à ce stade, que ce soit un hypochlorite, un peracide, un sulfite (ou SO₂), un métabisulfite, ou même parfois de l'eau oxygénée. En général, on ne dépassera pas une concentration de 1 mmole/litre (notamment 0,1 à 1 mmole/litre).

La mise en oeuvre du procédé selon l'invention implique l'utilisation d'une méthode de dosage reproductible et sensible de la méthionine et de ses deux oxydes, présents dans la gélatine. La méthode utilisée est adaptée de celle décrite dans Analytical Biochemistry 149 521-528 (1985), et mentionnée par Takehiro Tani lors de sa communication à la Royal Photographic Society (16 Sept. 1991 - Cambridge), dans laquelle il traitait de certaines propriétés de la gélatine oxydée.

Cette méthode consiste à hydrolyser la gélatine par action d'une solution aqueuse d'acide para-toluènesulfonique, avant de séparer par HPLC et doser les acides aminés libérés dans un appareil analyseur d'acides aminés, commercial, par exemple celui de marque Biotronik, commercialisé en France par la société B. Braun Sciencetec, sous la réfénce LC 5000. Dans un tel appareil, les acides aminés sont séparés de façon classique, par chromatographie sur une colonne de résine échangeuse de cations en éluant avec les solutions généralement préconisées par le fabricant mais de préférence celles conseillées pour les milieux physiologiques, souvent complexes.

On peut ainsi utiliser comme éluants, une solution aqueuse contenant par litre 9,4 g de citrate de lithium, 4H₂O avec 7,4 g d'acide citrique, H₂O et 60 ml de méthanol, le pH étant ajusté vers 2,3 par addition de 5,5 ml environ de solution aqueuse d'acide chlorhydrique à 37 % ainsi qu'une solution de 16,9 g de citrate de lithium, 4H₂O avec 1,8 g d'acide citrique, H₂O par litre dont le pH a été ajusté vers 3,2 par addition d'environ 8 ml de solution aqueuse d'acide chlorhydrique à 37 % ; l'utilisation de sels de lithium au lieu des sels de sodium, plus courants, permet une meilleure séparation de la méthionine et de ses oxydes.

Comme la gélatine contient de fortes quantités de proline et d'hydroxyproline qui pourraient interférer, on préfère utiliser pour détecter la méthionine et ses oxydes en sortie de la colonne de chromatographie, la dérivation à l'o-phtalaldéhyde et doser le dérivé isoindole obtenu par fluorimétrie plutôt que la dérivation à la ninhydrine. Ces deux techniques de révélation des amines primaires sont bien connues et décrites par exemple dans Spectra 11(87) p. 31-35 - août-septembre 1983.

Dans le procédé selon l'invention, de façon classique, la première étape de déminéralisation acide de l'os qui permet notamment d'éliminer le phosphate de calcium de l'os consiste à mettre les os broyés en suspension dans une solution aqueuse d'acide dilué, en général d'acide chlorhydrique, à la concentration de 30 à 60 g/l à une température comprise entre la température ambiante, c'est à dire de 20°C à 25°C et 5°C, de préférence entre 5°C et 15°C, et mieux, entre 10°C et 15°C. La solution aqueuse peut contenir du phosphate monocalcique provenant des extractions précédentes dans le cadre d'un procédé à contre-courant.

L'osséine isolée par décantation de la solution acide et, de préférence, lavée avec une solution aqueuse faiblement alcaline contenant en général moins de 5 g/l d'hydroxyde alcalin ou alcalino terreux, est ensuite immergée dans une solution aqueuse alcaline pendant plusieurs semaines à une température comprise entre 10°C et la température ambiante, au cours desquelles le collagène sera transformé pour pouvoir donner de la gélatine et des produits secondaires tels que graisses, mucopolysaccharides et certaines protéines passeront en solution ; le procédé selon l'invention implique l'utilisation comme agent alcalin de l'hydroxyde de calcium à la concentration habituelle de 20 à 60 g/l ; la phase aqueuse est renouvelée plusieurs fois, en général tous les 8 à 15 jours pour permettre d'éliminer l'ensemble des dérivés secondaires, passés en solution.

La durée du traitement sera comprise entre 1 et 4 mois, elle dépendra notamment de la matière première de départ, de la concentration en hydroxyde de calcium et de la température ; on préfère une durée supérieure à 3 mois pour obtenir une gélatine suffisamment pure.

Pour cette étape, selon l'invention, on maîtrise le pouvoir oxydo-réducteur du milieu en introduisant, de 10 à 20 jours avant la fin du traitement, dans le milieu alcalin, une solution aqueuse d'hypochlorite de calcium pour obtenir une concentration de 0,5 à 1,5 mmole par litre; on peut aussi introduire de l'hypochlorite de sodium.

Après élimination de la dernière solution alcaline, l'osséine spongieuse est lavée dans le matériel habituel, avec de l'eau puis avec des solutions aqueuses acides, contenant 0,2 à 0,5 moles/litre d'un acide minéral tel que l'acide chlorhydrique, nitrique, phosphorique ou sulfurique ou d'un acide organique tel que l'acide acétique ou lactique, pour neutraliser l'hydroxyde résiduel ; la dernière eau de lavage a généralement un pH compris entre 6 et 8,5. Pour cette étape, selon l'invention, on maîtrise l'oxydoréduction en introduisant de 2 à 4 heures avant la fin du dernier bain de lavage. un agent oxydant tel que de l'eau oxygénée, à raison de 0,1 à 1 mmole par kilo d'os mis en oeuvre; on peut aussi introduire un peracide tel que l'acide peracétique.

La gélatine est ensuite extraite de la masse d'osséine dans de l'eau chaude, à une température comprise entre 50°C et 85°C. La première extraction est de façon classique faite entre 50°C et 60°C ; à chaque extraction, on augmente ensuite la température de 5 à 10°C. On peut utiliser de 100 à 300 l d'eau pour 100kg d'os de départ à chaque extraction et maintenir le contact entre les phases solide et liquide jusqu'à ce que la concentration en gélatine de la solution soit comprise entre 30 g/l et 80 g/l.

Une première extraction de la gélatine est effectuée à 60°C avec 150 l d'eau pour 100 kg d'os de départ, contenant 0,1 mmole/l d'hypochlorite de sodium; on obtient ainsi une gélatine contenant
moins de 20 mg/kg de sulfone
moins de 800 mg/kg de sulfoxyde
et environ 7000 mg/kg de méthionine
par contre, si lors de la première extraction l'eau contient 20 mmole/1 d'hypochlorite de sodium on obtient une gélatine ayant
environ 6000 à 6500 mg/kg de méthionine et
moins de 50 mg/kg de sulfone
moins de 1500 mg/kg à 2000 mg/kg de sulfoxyde;
enfin si lors de la première extraction l'eau contient 0,1 mmole/1 d'anhydride sulfureux, on obtient une gélatine contenant
de 7500 à 8000 mg/kg de méthionine
et moins de 10 mg/kg de sulfone
moins de 250 mg/kg de sulfoxyde.

Les solutions aqueuses de gélatine extraite, maintenues à une température comprise entre 45°C et 60°C sont ensuite, de façon classique, filtrées sur un agent de filtration, comme des terres de diatomées, ou en filtre presse puis concentrées dans l'un des évaporateurs à vide généralement utilisés dans ce domaine, comme ceux commercialisés par Wiegand (DE) ou Luwa (CH) de type à flux descendant jusqu'à une concentration de 20 à 45 g/100 ml.

En général, on ajuste alors le pH de la solution à une valeur comprise entre 5,5 et 6 par addition d'une solution d'un acide minéral et éventuellement organique et on stérilise la solution en la portant durant 5 à 10 secondes à une température comprise entre 140 °c et 150°c. La solution concentrée est alors refroidie progressivement jusqu'à gélification dans une chambre à double enveloppe, réfrigérée par circulation.

Enfin, la solution gélifiée est extrudée en filaments et séchée à une température allant de 30° c à 75°c en fin d'opération. Un broyage final peut alors être effectué.

## Revendications

1. Procédé de fabrication d'une gélatine pour émulsions photographiques, inerte, comportant de 6000 à 8500 ppm de méthionine, dont moins de 20% est sous forme oxydée, qui consiste à :
a. déminéraliser les os par action d'un acide;
b. traiter les os déminéralisés par une solution aqueuse sursaturée d'hydroxyde de calcium pendant plusieurs semaines, à une température comprise entre 5°C et 25°C, puis laver et neutraliser;
c. extraire dans l'eau chaude la gélatine de l'osséine ainsi obtenue;
d. concentrer le bouillon de gélatine obtenu puis gélifier et sécher la gélatine,
caractérisé en ce que le pouvoir oxydo-réducteur des milieux de traitement est maîtrisé par introduction, vers la fin du traitement par l'hydroxyde de calcium en b), d'un agent oxydant à raison de 0,5 à 15 mmole/litre de milieu.

2. Procédé de fabrication selon la revendication 1, d'une gélatine pour émulsions photographiques, inerte, comportant de 6000 à 8000 ppm de méthionine, dont moins de 20% est sous forme oxydée, qui consiste :
a. à déminéraliser les os par action d'un acide,
b. à traiter l'os déminéralisé par une solution aqueuse sursaturée d'hydroxyde de calcium pendant plusieurs semaines, à une température comprise entre 10°C et 25°C,
c. à extraire dans l'eau chaude la gélatine de l'osséine ainsi traitée et neutralisée,
et d. à concentrer le bouillon de gélatine obtenu puis à gélifier et sécher la gélatine,
caractérisée en ce que le pouvoir oxydo-réducteur des milieux de traitement et d'extraction est contrôlé.

3. Procédé selon la revendication 1 ou 2, caractérisé en ce que l'agent oxydant est un hypochlorite alcalin ou alcalino-terreux.

4. Procédé selon l'une des revendications 1 à 3, caractérisé en ce qu'on introduit, à la fin de la neutralisation de l'osséine traitée en b), un agent oxydant dans l'eau de lavage, à raison de 0,1 à 10 mmole/litre de milieu.

5. Procédé selon la revendication 4, caractérisé en ce que l'agent oxydant est un hypochlorite alcalin ou alcalino-terreux, ou l'eau oxygénée.

6. Procédé selon l'une des revendications 1 à 5, caractérisé en ce qu'avant la concentration du bouillon de gélatine en d), on introduit dans le milieu un agent oxydant ou réducteur pour obtenir les taux de méthionine et de ses oxydes désirés.

7. Procédé selon la revendication 6, caractérisé en ce que l'agent oxydant ou réducteur est un hypochlorite alcalin ou alcalino-terreux, un sulfite, un métabisulfite, l'anhydride sulfureux, un peracide ou l'eau oxygénée, introduit à raison de 0,1 à 1 mmole/litre.

8. Procédé selon la revendication 1, caractérisé en ce que l'on réalise l'étape b) à une température entre 5°C et 15°C.

## Claims

1. Process for producing an inert gelatine for photographic emulsions, comprising from 6000 to 8500 ppm of methionine, less than 20% of which is in oxidised form, which consists in:
a. demineralising bones by treatment with an acid;
b. treating the demineralised bones with a supersaturated aqueous calcium hydroxide solution for several weeks at a temperature of between 5°C and 25°C, then washing and neutralising them;
c. extracting the gelatine from the ossein thus obtained in hot water;
d. concentrating the gelatine broth obtained, then gelatinising and drying the gelatine,
characterised in that the oxidoreducing power of the treatment media is controlled by the introduction, towards the end of the calcium hydroxide treatment in b), of an oxidising agent in a quantity of 0.5 to 15 mmol/litre of medium.

2. Process according to claim 1 for producing an inert gelatine for photographic emulsions, comprising from 6000 to 8500 ppm of methionine, less than 20% of which is in oxidised form, which consists in:
a. demineralising bones by treatment with an acid;
b. treating the demineralised bones with a supersaturated aqueous calcium hydroxide solution for several weeks at a temperature of between 10°C and 25°C;
c. extracting the gelatine from the ossein thus treated and neutralised, in hot water; and
d. concentrating the gelatine broth obtained, then gelatinising and drying the gelatine,
characterised in that the oxidoreducing power of the treatment and extraction media is controlled.

3. Process according to claim 1 or 2, characterised in that the oxidising agent is an alkali metal hypochlorite or an alkaline earth metal hypochlorite.

4. Process according to one of claims 1 to 3,
characterised in that, at the end of the neutralisation of the ossein treated in b), an oxidising agent is added to the washing water in an amount of from 0.1 to 10 mmol/litre of medium.

5. Process according to claim 4, characterised in that the oxidising agent is an alkali metal hypochlorite or an alkaline earth metal hypochlorite or oxygenated water.

6. Process according to one of claims 1 to 5,
characterised in that, before the concentration of the gelatine broth in d), an oxidising or reducing agent is added to the medium in order to obtain the desired levels of methionine and its oxides.

7. Process according to claim 6, characterised in that the oxidising or reducing agent is an alkali metal hypochlorite or an alkaline earth metal hypochlorite, a sulphite, a metabisulphite, sulphuric anhydride, a peracid or oxygenated water, added in an amount from 0.1 to 1 mmol/litre.

8. Process according to claim 1, characterised in that step b) is carried out at a temperature of between 5°C and 15°C.

## Patentansprüche

1. Verfahren zur Herstellung einer inerten Gelatine für Emulsionsfotografien, umfassend 6000 - 8500 ppm Methionin, wobei wenigstens 20% in Oxidform vorliegt, bestehend aus:
a. Entmineralisieren der Knochen mittels einer Säure;
b. Behandeln der entmineralisierten Knochen mittels einer wässrigen übersättigten Calciumhydroxidlösung über mehrere Wochen, bei einer Temperatur zwischen 5°C und 25°C und anschließendem Waschen und Neutralisieren;
c. Extrahieren der so erhaltenen Knochengelatine in heißem Wasser;
d. Einengen der erhaltenen Gelatine-Bouillon sowie anschließendem Gelieren und Trocknen der Gelatine,
dadurch gekennzeichnet, daß man die Oxidation-Reduktion im Behandlungsmedium gegen Ende der Calciumhydroxidbehandlung in b) durch Zugabe von Oxidationsmittel in einer Menge von 0,5 - 15 mmol/l bezogen auf das Medium, regelt.

2. Verfahren zur Herstellung einer inerten Gelatine für Emulsionsfotografien nach Anspruch 1, umfassend 6000 - 8000 ppm Methionin, wobei wenigstens 20% in Oxidform vorliegt, bestehend aus:
a. Entmineralisieren der Knochen mittels einer Säure;
b. Behandeln der entmineralisierten Knochen mittels einer wässrigen übersättigten Calciumhydroxidlösung über mehrere Wochen, bei einer Temperatur zwischen 10°C und 25°C;
c. Extrahieren der auf diese Weise erhaltenen Knochengelatine in heißem Wasser und neutralisieren; und
d. Einengen der erhaltenden Gelatine-Bouillon sowie anschließendem Gelieren und Trocknen der Gelatine,
dadurch gekennzeichnet, daß die Oxidation-Reduktion im Behandlungsmedium und die Extraktion kontrolliert wird.

3. Verfahren nach einem der Ansprüche 1 oder 2,
dadurch gekennzeichnet, daß das Oxidationsmittel ein Alkalihypochlorit oder Erdalkalihypochlorit ist.

4. Verfahren nach einem der Ansprüche 1 bis 3,
dadurch gekennzeichnet, daß man gegen Ende der Neutralisation bei der Knochenbehandlung in b) ein Oxidationsmittel dem Waschwasser im Verhältnis von 0,1 - 10 mmol/l, bezogen auf das Medium, zusetzt.

5. Verfahren nach Anspruch 4,
dadurch gekennzeichnet, daß das Oxidationsmittel ein Alkalihypochlorit oder Erdalkalihypochlorit oder Wasserstoffperoxyd ist.

6. Verfahren nach einem der Ansprüche 1 bis 5,
dadurch gekennzeichnet, daß man in das Medium, vor Einengung der Gelatine-Bouillon in d), ein Oxidations- oder Reduktionsmittel hineinfügt, um den Methioninanteil und den gewünschten Oxidationsgrad zu erhalten.

7. Verfahren nach Anspruch 6, dadurch gekennzeichnet, daß das Oxidations- oder Reduktionsmittel ein Alkalihypochlorit oder Erdalkalihypochlorit, ein Sulfit, ein Metabisulfit, schweflige Säure, eine Persäure oder Wasserstoffperoxyd ist, das in einer Menge von 0,1 bis 1 mmol/l hinzugefügt wird.

8. Verfahren nach Anspruch 1,
dadurch gekennzeichnet, daß man den Schritt b) bei einer Temperatur zwischen 5°C und 15°C durchführt.
